# EUROPÄISCHE PATENTSCHRIFT

(11) **EP 1 147 035 B1**
(45) Veröffentlichungstag und Bekanntmachung des Hinweises auf die Patenterteilung: **18.12.2002**
(21) Anmeldenummer: 00908942.6
(22) Anmeldetag: 26.01.2000
(51) Int. Cl.: B60R 21/26

(54) **GASGENERATOR**
GAS GENERATOR
GENERATEUR DE GAZ

(30) Priorität: 27.01.1999 DE 19903237
(43) Veröffentlichungstag der Anmeldung: 24.10.2001
(73) Patentinhaber: Contec Chemieanlagen GmbH, 84544 Aschau am Inn (DE)
(72) Erfinder: GAST, Eduard, D-84559 Kraiburg am Inn (DE); SEMMLER, Peter, D-84544 Aschau am Inn (DE); SCHMID, Bernhard, D-84431 Heldenstein (DE); BERGMANN, Maximilian, D-84419 Schwindegg (DE)
(74) Vertreter: Albrecht, Thomas, Dr.
(86) Internationale Anmeldenummer: DE0000233
(87) Internationale Veröffentlichungsnummer: WO00044593

(56) Entgegenhaltungen:
- DE-A- 19 617 249
- DE-U- 29 821 232
- US-A- 3 877 882
- US-A- 4 998 750

## Beschreibung

Die Erfindung betrifft einen einfach aufgebauten pyrotechnischen Gasgenerator vorzugsweise für ein Airbagsystem bestehend aus einem Gehäuse (1), einer Anzündeinheit (2), einer gaserzeugenden Mischung (3) sowie einem sich in Ausströmrichtung verjüngenden, insbesondere konisch ausgebildeten Kühlsystem oder Kühl- und Filtersystem (4), das die gaserzeugende Mischung (3) beinhaltet, wobei das Gehäuse (1) vorzugsweise einteilig und rohrförmig ist.

Der Austritt der Verbrennungsgase erfolgt durch Ausströmöffnungen (5), die an der der Anzündeinheit entgegengesetzten Seite radial, axial oder schräg angeordnet sind. Das Kühlsystem oder Kühl- und Filtersystem unterteilt den Gasgenerator in einen Brennraum (6), der die gaserzeugende Mischung (3) enthält und in dem ein Gas durch Verbrennen der gaserzeugenden Mischung gebildet wird und in einen Abströmraum (7), in dem das gekühlte und gegebenenfalls auch gefilterte Gas abströmen und durch die Ausströmöffnungen (5) austreten kann. Durch die sich in Ausströmrichtung verjüngende, insbesondere konische Anordnung des Kühlsystems oder Kühl- und Filtersystems wird eine optimale Wirkung hinsichtlich Kühlung und Filtration bei minimalem Raumbedarf und Reduzierung des Gewichts erreicht.

### Beschreibung

Die Erfindung betrifft einen Gasgenerator auf pyrotechnischer Basis zur Erzeugung gekühlter oder gekühlter und gefilterter Gase, vorzugsweise zur Anwendung bei Airbagsystemen, insbesondere zur Anwendung bei Seitenairbagsystemen.

Derartige Gasgeneratoren dienen im Falle von Airbagsystemen zur Füllung des Luftsackes, der dann den Fahrzeuginsassen bei einer Kollision schützt. Ferner eignen sich solche Gasgeneratoren zur Füllung von Geräten bei denen sehr kurze Reaktions- und/oder Befüllzeiten erforderlich sind.

Durch einen Stromimpuls wird die Anzündeinheit des Gasgenerators gezündet, die dann die pyrotechnische gaserzeugende Mischung zündet, die in der Regel unter hohem Druck abbrennt und die erforderliche Gasmenge liefert. Da bei allen bislang bekannten pyrotechnischen Mischungen bei ihrem Abbrand außer Gasen mit hoher Temperatur auch meist noch feste Bestandteile entstehen, ist eine Kühlung oder Kühlung und Filterung der Verbrennungsgase erforderlich.

Zur Lösung dieses Problems ist eine Vielzahl von Kühl- und Filteranordnungen bekannt, die jedoch alle axial oder radial oder axial und radial angeordnet sind. So beschreibt z.B. die DE 196 17 249 eine axiale und radiale Anordnung dieser Kühl- und Filterelemente. Diese bekannten Anordnungen der Kühl- und Filtersysteme weisen folgende Nachteile auf.

Bei axialer Anordnung des Kühl- und Filtersystems steht nur ein relativ kleiner Durchströmungsquerschnitt zur Verfügung und dadurch ist eine ungenügende Kühlung und schlechte Filterung gegeben. Im Falle von Gasgeneratoren mit geringem Durchmesser und demgemäß großer Länge ist diese Anordnung ungünstig, da der erforderliche freie Querschnitt für die Gasströmung sehr gering wird.

Bei radialer Anordnung des Kühl- und Filtersystems ergibt sich das Problem, daß bei direktem Kontakt mit der Innenwand des Gasgeneratorgehäuses das Kühl- und Filtersystem im wesentlichen nur im Bereich der Ausströmöffnung wirksam ist mit dem bekannten Problem wie in der DE 196 17 249 beschrieben, d.h. es kommt zu einer hohen Belastung des Filtermaterials im Bereich der Ausströmöffnungen. In extremen Fällen kann es zu Ausstanzungen oder zu Lochmustern innerhalb des Filtermaterials kommen. In diesen Fällen kann das in der Brennkammer entstehende Gas nahezu ungehindert aus der Brennkammer ausströmen.

Bei einer beabstandeten Anordnung des radialen Kühl- und Filtersystems wie erfindungsgemäß in DE 196 17 249 beschrieben, ist ein großer Raumbedarf erforderlich. Dieser Nachteil vergrößert sich um so mehr, je kleiner der Durchmesser des Generators wird und damit eine entsprechende größere Länge erforderlich wird.

Insbesondere bei Gasgeneratoren für Seitenairbagsysteme werden jedoch rohrförmige Gasgeneratoren mit kleinem Durchmesser und entsprechend großer Länge aus einbautechnischen Gründen bevorzugt.

Aufgabe der vorliegenden Erfindung ist es daher, eine Kühl oder Kühl- und Filteranordnung zu erreichen, die die Konstruktion eines Gasgenerators ermöglicht, die die genannten Nachteile vermeidet und eine optimale Anordnung des Kühlsystems oder Kühl- und Filtersystems hinsichtlich Raumbedarf und Wirkungsweise bietet.

Die Aufgabe wird erfindungsgemäß auf überraschend einfache Art und Weise dadurch gelöst, daß das Kühlsystem oder Kühl- und Filtersystem in Ausströmrichtung verjüngend, insbesondere konisch ausgebildet ist. Der Gasgeneratorinnenraum wird dadurch in zwei Räume unterteilt, wobei der Brennraum die gaserzeugende Mischung, die in der Regel in Tablettenform vorliegt oder aber auch als Granulat o.ä. vorliegen kann, enthält und der Abströmraum als Beruhigungszone für die Verbrennungsgase wirkt. Im Abströmraum können auch weitere Abbrandprodukte gefiltert und kondensiert werden.

Durch die erfindungsgemäß sich in Ausströmrichtung verjüngende, insbesondere konische Anordnung des Kühlsystems oder Kühl- und Filtersystems, wobei der größere Querschnitt anzünderseitig und der kleinere Querschnitt auf der Seite der Ausströmöffnung ist, wird erreicht, daß sich mit zunehmendem Gasstrom in Richtung der Ausströmöffnung die Beruhigungszone vergrößert und somit dem zunehmenden Massenstrom ein entsprechend größerer Abströmraum zur Verfügung steht. Damit wird auch eine gleichmäßigere Belastung des Kühlsystems oder Kühl- und Filtersystems erreicht. Der Querschnitt kann eine kreisförmige, elliptische, quadratische oder vieleckige Form aufweisen.

Das Kühlsystem oder Kühl- und Filtersystem kann gegebenenfalls an seiner Außenseite mit 2 oder mehreren Elementen versehen sein, die den definierten Abstand und die zentrische Anordnung zur Gasgeneratorinnenwand sicherstellen.

Ob lediglich ein Kühlsystem oder ein Kühl- und Filtersystem in der erfindungsgemäßen sich in Ausströmrichtung verjüngenden, insbesondere konischen Anordnung einzusetzen ist, hängt von der Art der gaserzeugenden Mischung und der Anforderung hinsichtlich der zulässigen Partikelmenge ab.

Das Kühlsystem besteht vorzugsweise aus einem Gitternetz, einem Lochblech, einem Gewirkkörper oder einem Sintermaterial. Je nach Porösität dieser Materialien wird außer dem Kühleffekt zusätzlich auch eine gewisse Filterwirkung erreicht. Eine weitere Reduzierung von Partikeln aus dem Gasstrom findet im Abströmraum zwischen dem Kühlsystem und der Generatorinnenwand statt, da sich Partikel an der Generatorinnenwand ablagern und eventuell vorhandene flüssige Verbrennungsprodukte an der Generatorinnenwand kondensieren. Begünstigt werden diese Effekte durch die erfindungsgemäß sich in Ausströmrichtung verjüngende, insbesondere konische Ausbildung des Kühlsystems. Damit wird erreicht, daß mit zunehmenden Massenstrom der Verbrennungsgase in Richtung der Ausströmöffnungen nicht eine entsprechende Zunahme der Strömungsgeschwindigkeit erfolgt, da der sich zunehmende freie Querschnitt in Richtung der Ausströmöffnungen eine Reduzierung der Strömungsgeschwindigkeit bewirkt.

Das Kühl- und Filtersystem wird entweder durch die Verwendung von Materialien wie Gitternetz, Lochblech oder Gewirk mit kleiner Porengröße gebildet, oder es können Sandwichanordnungen bzw. Mehrschichtaufbauten zur Anwendung kommen. Derartige Sandwichanordnungen bestehen aus mehreren Schichten aus gleichen oder verschiedenen Materialien mit gleichen oder verschiedenen Porengrößen. In einer Ausführungsform weist das Kühlsystem oder Kühl- und Filtersystem einen Mehrschichtaufbau auf mit einer grobporösen Struktur (z.B. Lochblende) im Innenbereich und einer feinporösen Struktur (z.B. Gewirk) im Außenbereich. In einer weiteren Ausführungsform weist das Kühlsystem oder Kühl- und Filtersystem einen Mehrschichtaufbau auf mit einer feinporösen Struktur im Innenbereich und einer grobporösen Struktur im Außenbereich. Innenbereich bezeichnet hier den dem Brennraum zugewandten Bereich. Außenbereich bezeichnet hier den der Generatorinnenwand zugewandten Bereich.

Für derartige Kühl- und Filtersysteme in Sandwichbauweise sind selbstverständlich alle Vorteile der erfindungsgemäßen sich in Ausströmrichtung verjüngenden, insbesondere konischen Anordnung wie vorstehend beschrieben gültig.

Die Erfindung wird in den folgenden nicht einschränkenden Ausführungsbeispielen anhand von Zeichnungen dargestellt und wird anhand der nachfolgenden Beschreibung näher erläutert.

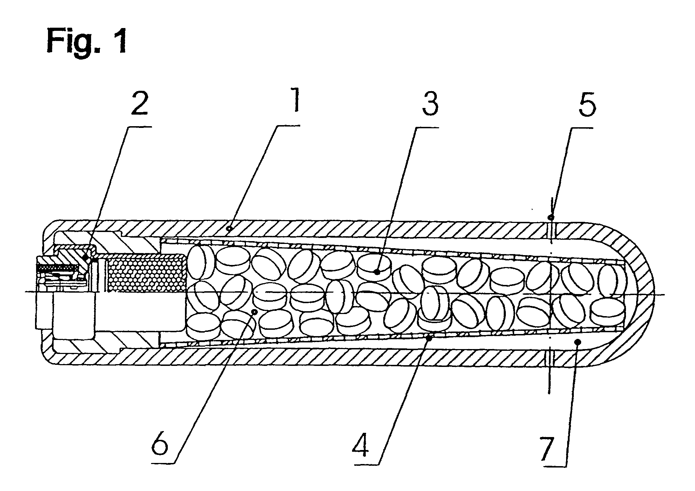

Figur 1 zeigt schematisiert ein Ausführungsbeispiel eines erfindungsgemäßen Gasgenerators in Seitenansicht und ist nicht notwendigerweise maßstäblich zu verstehen.

Die Figur 1 zeigt einen Gasgenerator, der sich im wesentlichen aus einem Gehäuse 1, einer Anzündeinheit 2, der gaserzeugenden Mischung 3 in Tablettenform und einem Kühlsystem oder Kühl- und Filtersystem 4, das die gaserzeugende Mischung (3) beinhaltet, zusammensetzt.

Das Gasgeneratorgehäuse 1, das vorzugsweise einteilig und rohrförmig ausgebildet ist, besteht aus einem geeigneten druck- und temperaturbeständigen Werkstoff, vorzugsweise aus einer Stahl- oder Aluminiumlegierung. Es ist an einem Ende mit Ausströmöffnungen 5 versehen, die radial wie dargestellt, oder auch axial oder schräg angeordnet sein können. Die Ausströmöffnungen werden durch eine Folie, insbesondere Metallfolie oder dünnwandige Metallkappe (nicht dargestellt) verschlossen, um ein Eindringen von Feuchtigkeit zu verhindern. Am gegenüberliegenden Ende nimmt das Gasgeneratorgehäuse die Anzündeinheit 2 auf und wird durch eine geeignete Methode, wie z.B. Bördeln, verschlossen. Das im Gasgenerator konisch ausgebildete Kühlsystem oder Kühl- und Filtersystem 4 unterteilt den Gasgeneratorinnenraum in einen Brennraum 6, in dem die gaserzeugende Mischung 3 untergebracht ist und in einen Abströmraum 7, der eine Beruhigungszone darstellt, durch den die Verbrennungsgase nach Passieren des Kühlsystems oder Kühl- und Filtersystems mit relativ geringer Geschwindigkeit abströmen und dann durch die Ausströmöffnungen 5 aus dem Gasgenerator ausströmen können.

Der Gasgenerator wird dadurch aktiviert, daß ein Stromimpuls die Anzündeinheit 2 zündet. Die Anzündeinheit 2 besteht z.B. aus einer elektrisch aktivierbaren Zündpille und einer darauffolgenden üblichen Zündkette, die so ausgelegt ist, daß eine sichere und kurzzeitige Anzündung der gaserzeugenden Mischung 3 gewährleistet ist. Das durch den Abbrand der gaserzeugenden Mischung 3 entstehende Gas durchströmt das Kühlsystem oder Kühl- und Filtersystem und verläßt nach Passieren des Abströmraums 7 den Gasgenerator durch die Ausströmöffnungen 5, um dann z.B. einen Luftsack (nicht dargestellt) zu füllen. Das Kühlsystem oder Kühl- und Filtersystem dient dazu, die heißen Verbrennungsgase abzukühlen und sofern erforderlich Feststoffpartikel zurückzuhalten, so daß die Verbrennungsgase die für die Anwendung erforderliche Temperatur und Reinheit aufweisen.

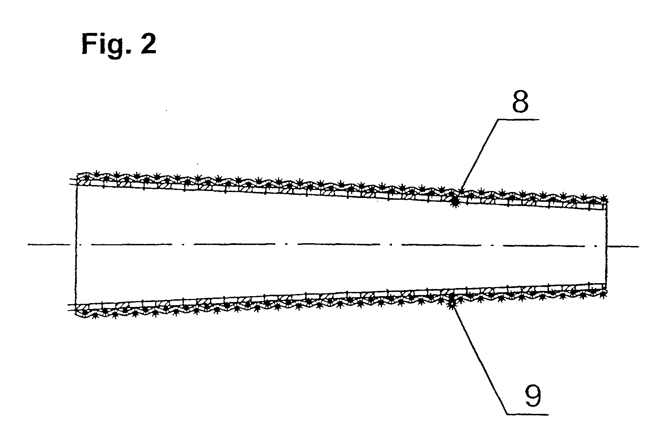

Figur 2 zeigt ein Ausführungsbeispiel für ein konisches Kühl- und Filtersystem in Mehrschichtaufbau. Die grobporöse innere Struktur 8 ist dabei als Lochblech ausgeführt und kühlt die Verbrennungsgase. Die feinporöse äußere Struktur 9 bildet ein Gitternetz, das Partikel zurückhält und die Verbrennungsgase noch weiter abkühlt.

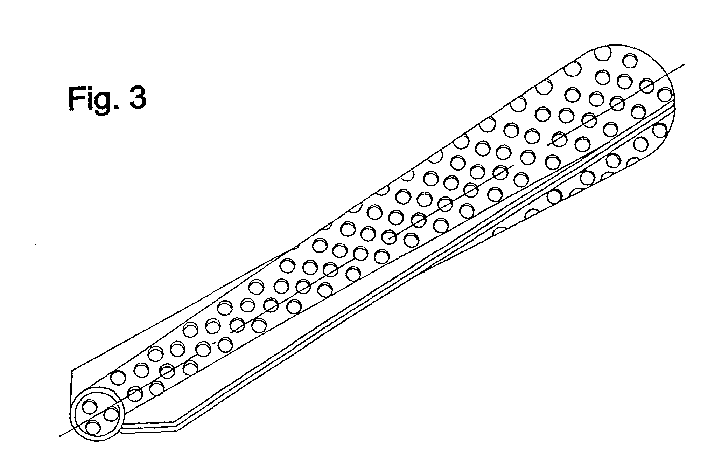

Figur 3 zeigt ein Ausführungsbeispiel für ein Kühlsystem in einschichtigem konischen Aufbau, das an seiner Außenseite mit zwei um 180° versetzten Abstandselementen versehen ist, die eine zentrische Anordnung in dem zylindrischen Gasgeneratorgehäuse 1 sicherstellen.

## Patentansprüche

1. Gasgenerator bestehend aus einem Gehäuse (1), das an einem Ende mit Ausströmöffnungen (5) versehen ist, einer Anzündeinheit (2), einer gaserzeugenden Mischung (3), einem Kühlsystem oder Kühl- und Filtersystem (4), das den Generator in einen Brennraum (6), der die gaserzeugende Mischung enthält und in einen Abströmraum (7) unterteilt, **dadurch gekennzeichnet, daß** das Kühlsystem oder Kühl- und Filtersystem (4) in Ausströmrichtung verjüngend ausgebildet ist und die gaserzeugende Mischung (3) beinhaltet, wobei der kleinere Querschnitt des Kühlsystems oder Kühl- und Filtersystems (4) im Bereich der Ausströmöffnungen (5) liegt.

2. Gasgenerator nach Anspruch 1, **dadurch gekennzeichnet, daß** das Kühlsystem oder Kühlund Filtersystem (4) konisch ausgebildet ist.

3. Gasgenerator nach Anspruch 1 oder 2, **dadurch gekennzeichnet, daß** das Kühlsystem oder Kühl- und Filtersystem (4) ausgewählt ist aus einem Gitternetz, einem Lochblech, einem Gewirkkörper oder einem Sintermaterial.

4. Gasgenerator nach einem der Ansprüche 1 bis 3, **dadurch gekennzeichnet, daß** das Kühlsystem oder Kühl- und Filtersystem (4) aus einem Mehrschichtaufbau aus mehreren Schichten aus gleichen oder verschiedenen Materialien mit gleichen oder verschiedenen Porengrößen besteht.

5. Gasgenerator nach Anspruch 4, **dadurch gekennzeichnet, daß** das Kühlsystem oder Kühlund Filtersystem (4) im Innenbereich eine grobporöse Struktur und im Außenbereich eine feinporöse Struktur aufweist.

6. Gasgenerator nach Anspruch 4, **dadurch gekennzeichnet, daß** das Kühlsystem oder Kühlund Filtersystem (4) im Innenbereich eine feinporöse Struktur und im Außenbereich eine grobporöse Struktur aufweist.

7. Gasgenerator nach einem der Ansprüche 1 bis 6, **dadurch gekennzeichnet, daß** nur ein Abschnitt des Kühlsystems oder Kühl- und Filtersystems (4) aus einem sich in Ausströmrichtung verjüngenden Teil besteht.

8. Gasgenerator nach einem der Ansprüche 1 bis 7, **dadurch gekennzeichnet, daß** nur ein Abschnitt des Kühlsystems oder Kühl- und Filtersystems (4) aus einem konischen Teil besteht.

9. Gasgenerator nach einem der Ansprüche 1 bis 8, **dadurch gekennzeichnet, daß** das Kühlsystem oder Kühl- und Filtersystem (4) im Querschnitt eine kreisförmige, elliptische, quadratische oder vieleckige Form aufweist.

10. Gasgenerator nach einem der Ansprüche 1 bis 9, **dadurch gekennzeichnet, daß** das Kühlsystem oder Kühl- und Filtersystem (4) an seiner Außenseite mit 2 oder mehreren Elementen versehen ist, die den definierten Abstand und die zentrische Anordnung zur Gasgeneratorinnenwand sicherstellen.

11. Gasgenerator nach einem der Ansprüche 1 bis 10, **dadurch gekennzeichnet, daß** das Gehäuse (1) ein einteiliges rohrförmiges Gehäuse ist.

12. Airbagsystem umfassend einen Gasgenerator nach einem der Ansprüche 1 bis 11.

13. Verwendung eines Gasgenerators nach einem der Ansprüche 1 bis 11 in einem Seitenairbagsystem.

## Claims

1. A gas generator, consisting of a housing (1) which contains exit ports (5) on one end, an ignition unit (2), a gas generating mixture (3), a cooling system or cooling and filtering system (4) which separates the generator into a combustion chamber (6) containing the gas generating mixture and an outflow chamber (7), **characterized in that** the cooling system or cooling and filtering system (4) tapers in the discharge direction and contains the gas generating mixture (3), the smaller cross-section of the cooling system or cooling and filtering system (4) being located in the area of the discharge openings (5).

2. The gas generator according to claim 1, **characterized in that** the cooling system or cooling and filtering system (4) is conically shaped.

3. The gas generator according to claim 1 or 2, **characterized in that** the cooling system or cooling and filtering system (4) is selected from a grid, a perforated plate, a texture or a sintered material.

4. The gas generator according to any one of claims 1 to 3, **characterized in that** the cooling system or cooling and filtering system (4) consists of a multi-layered design with several layers of the same or different materials with the same or different pore sizes.

5. The gas generator according to claim 4, **characterized in that** the cooling system or cooling and filtering system (4) displays a coarse-pored structure on the inside and a fine-pored structure on the outside.

6. The gas generator according to claim 4, **characterized in that** the cooling system or cooling and filtering system (4) displays a fine-pored structure on the inside and a coarse-pored structure on the outside.

7. The gas generator according to any one of claims 1 to 6, **characterized in that** only a section of the cooling system or cooling and filtering system (4) consists of a part tapering in the discharge direction.

8. The gas generator according to any one of claims 1 to 7, **characterized in that** only a section of the cooling system or cooling and filtering system (4) consists of a conical part.

9. The gas generator according to any one of claims 1 to 8, **characterized in that** the cross-section of the cooling system or cooling and filtering system (4) displays a circular, elliptic, square or polygonal shape.

10. The gas generator according to any one of claims 1 to 9, **characterized in that** the cooling system or cooling and filtering system (4) contains 2 or more elements on its outside which ensure the defined distance and the centered arrangement relative to the inner wall of the gas generator.

11. The gas generator according to any one of claims 1 to 10, **characterized in that** the housing (1) is a one-piece tubular housing.

12. An airbag system, comprising a gas generator according to any one of claims 1 to 11.

13. Use of a gas generator according to any one of claims 1 to 11 in a side airbag system.

## Revendications

1. Générateur de gaz comprenant un corps (1), qui est pourvu à une extrémité d'orifices de sortie (5), une unité de mise à feu (2), un mélange de production de gaz (3), un système de refroidissement ou un système de refroidissement et de filtre (4), subdivisé en une chambre de combustion (6) qui contient le mélange de production de gaz et en une chambre de sortie (7), **caractérisé en ce que** le système de refroidissement ou le système de refroidissement et de filtre (4) se rétrécit dans la direction d'écoulement et contient le mélange de production de gaz (3), la section plus petite du système de refroidissement ou du système de refroidissement et de filtre (4) étant située dans la région des orifices de sortie (5).

2. Générateur de gaz selon la revendication 1, **caractérisé en ce que** le système de refroidissement ou le système de refroidissement et de filtre (4) a une conformation conique.

3. Générateur de gaz selon la revendication 1 ou 2, **caractérisé en ce que** le système de refroidissement ou le système de refroidissement et de filtre (4) est formé de manière sélective d'une structure de grille, d'une tôle perforée, d'un élément tricoté ou d'un matériau fritté.

4. Générateur de gaz selon la revendication 1 à 3, **caractérisé en ce que** le système de refroidissement ou le système de refroidissement et de filtre (4) est formé d'une structure multicouches formée de plusieurs couches de matériau de même porosité ou avec des porosités différentes.

5. Générateur de gaz selon la revendication 4, **caractérisé en ce que** le système de refroidissement ou le système de refroidissement et de filtre (4) présente dans la région intérieure une structure poreuse à grandes pores et dans la région extérieure une structure poreuse à fines pores.

6. Générateur de gaz selon la revendication 4, **caractérisé en ce que** le système de refroidissement ou le système de refroidissement et de filtre (4) présente dans la région intérieure une structure poreuse à fines pores et dans la région extérieure une structure poreuse à grandes pores.

7. Générateur de gaz selon la revendication 1 à 6, **caractérisé en ce que** seule une portion du système de refroidissement ou du système de refroidissement et de filtre (4) est formé d'un élément qui se rétrécit en forme de cône dans la direction d'écoulement.

8. Générateur de gaz selon la revendication 1 à 7, **caractérisé en ce que** seule une portion du système de refroidissement ou du système de refroidissement et de filtre (4) est formé d'un élément conique.

9. Générateur de gaz selon la revendication 1 à 8, **caractérisé en ce que** le système de refroidissement ou le système de refroidissement et de filtre (4), en section transversale, présente une forme circulaire, elliptique, rectangulaire ou polygonale.

10. Générateur de gaz selon la revendication 1 à 9, **caractérisé en ce que** le système de refroidissement ou le système de refroidissement et de filtre (4) sur sa face extérieure est pourvu de deux éléments ou plus qui assurent la position centrée par rapport à la paroi intérieure du générateur de gaz.

11. Générateur de gaz selon la revendication 1 à 10, **caractérisé en ce que** le corps (1) est un corps tubulaire monobloc.

12. Système de coussin gonflable comprenant un générateur de gaz selon une des revendications 1 à 11.

13. Utilisation d'un générateur de gaz selon une des revendications 1 à 11 dans un système de coussin gonflable latéral...
